# EUROPEAN PATENT SPECIFICATION

(11) **EP 0 982 517 B1**
(45) Date of publication and mention of the grant of the patent: **13.10.2004**
(21) Application number: 98830511.6
(22) Date of filing: 25.08.1998
(51) Int. Cl.: F16J 15/08

(54) **Automotive steel cylinder head gasket**
Stahlzylinderkopfdichtung für Kraftfahrzeuge
Joint de culasse en acier pour automobile

(43) Date of publication of application: 01.03.2000
(73) Proprietor: FEDERAL-MOGUL OPERATIONS ITALY S.r.l., 12084 Mondovi (IT)
(72) Inventor: Martini, Gino, 13051 Biella (IT); Cominetti, Stefano, 28100 Novara (IT)
(74) Representative: Spandonari, Carlo, Dr. Ing.

(56) References cited:
- EP-A- 0 757 195
- EP-A- 0 797 029
- EP-A- 0 853 204

## Description

This invention is concerned with automotive steel cylinder head gaskets.

Steel-plate gaskets have achieved wide acceptance as seals for cylinder heads of internal combustion engines. These are sometimes single-layered but, more usually, they are multi-layered, and in the latter case they generally comprise a flat base plate of stainless steel, which is stacked together with one or several plates of spring steel, or functional layers, having embossed beads to provide an elastic reaction when compressed between the engine block and the cylinder head. While beads or embossments may be distributed variously over the plate area, a so-called bore bead is always provided at a small distance around each cylinder bore.

In order to provide a higher sealing compression near the cylinder bores, steel-plate gaskets are further provided with a so-called stopper immediately adjacent the bore. This is a reinforcement or differential thickness arranged between the bore bead and the bore, and acts both as a first-stage sealing element for combustion gases and as a compression limiter for the elastic bore bead.

Stoppers have customarily been made by folding the edge of one plate either over itself or over the edge of an adjacent plate. However, the thickness of a stopper obtained by this technique is necessarily exactly twice the thickness of the plate, and cannot be adjusted to the optimum value desired.

Accordingly, it has been proposed to provide a stopper by butt-welding a steel ring to the bore edge of the plate. With this technique, the thickness of the stopper can be finely adjusted to any desired value, but its manufacturing cost is very high.

Another proposed technique, taught in EP-A-0 757 195 and in EP-A-0 797 029 and corresponding to the features of the preamble of claim 1 is to deposit a layer of a metal powder along the the edge of the bore aperture in the gasket plate and to sinter it in place by a heating process. However, the thickness of the layer so obtained cannot be accurately controlled.

The use of a layer of a synthetic resin in a metal gasket is also taught in EP-A-0 853 204, though not as a stopper, but rather as a filler by to stiffen or thicken an embossed head in a metal sheet.

The main object of the invention is therefore to provide an automotive steel cylinder head gasket which can be manufactured with stoppers of any desired thickness with a good accuracy and at a low manufacturing cost.

Another object is to provide an automotive steel cylinder head gasket which can be easily provided with stoppers of different thickness in one step only, as required by different operating conditions.

The above object, as well as other objects and advantages such as will appear from the disclosure, are achieved by the invention with an automotive steel cylinder head gasket having the features recited in claim 1.

A few preferred embodiments of the invention will now be described, with reference to the enclosed drawings, given by way of example, wherein:
Figure 1 is a broken-away, plan view of a steel cylinder head gasket according to a preferred embodiment of the invention;
Figure 2 is a view in cross-section made along line II-II of Figure 1, on an enlarged scale, of a portion of the gasket, shown in operating relation to the block and head of an internal-combustion engine; and
Figure 3 is a view similar to Figure 2, for another embodiment of the invention.

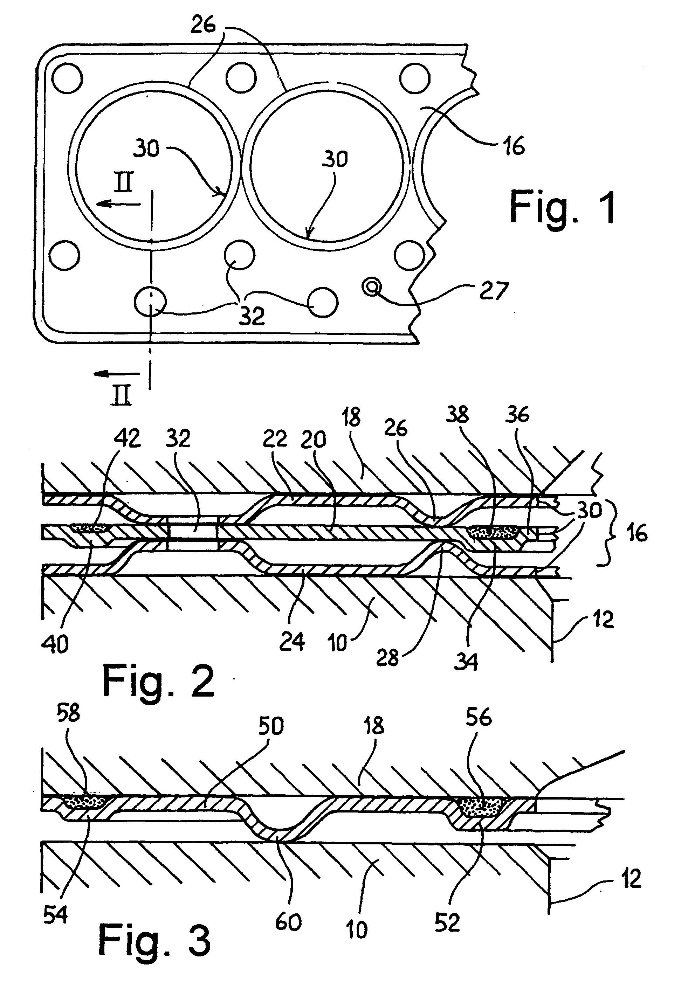

In the Figures, vertical dimensions are exaggerated with respect to horizontal dimensions, for clarity of illustration. With reference to Figure 1 and 2, a partially shown engine block 10 of an automotive internal combustion engine has cylinder bores such 12, within which respective pistons (not shown) are slidably received. A gasket 16 is laid on top of engine block 10, and a cylinder head 18 (also broken away) is bolted on top of gasket 16, as known in the art.

Gasket 16 is a three-layer steel-plate gasket, comprising a first stainless steel plate 20, or shim plate, which is stacked together with a second, upper spring steel plate 22 and with with a third, lower spring steel plate 24, also known as functional layers, both having conventional, embossed bore beads such as 26 and 28, respectively. All plates are preferably coated on one or both sides with a thin elastomeric layer (not shown), as known in the art, and are riveted or caulked together in at least two points such as 27, to maintain them assembled in the desired relationship, also as known in the art. The three stacked plates 20, 22 and 24 have openings 30 corresponding to the cylinder bores 12 and also a number of holes such as 32, for oil and water passages, bolts, and the like.

According to the invention, plate 20 is also embossed with a first shallow trough 34, or bore trough, running around each cylinder aperture 30, between the latter and bore bead 26. A short flat lip 36 is left between the inner limit of the trough and the bore edge. The trough contains a deposit 38 of a hard material, which has been applied in the fluid state and then cured to a solid mass. The hard material is preferably a high-resistance, thermosetting resin, typically an epoxy resin, and is preferably mixed with a mineral or metallic filler, such as powdery graphite or crushed mica, or a fine aluminum powder. Alternatively, the hard material may be a metal powder that has been sintered in place.

Trough 34 is made by pressing the plate, preferably in the blanking step itself, so that it involves substantially no additional cost. A thermosetting resin is then preferably applied in a liquid, viscous form, by conventional silk-screen printing techniques, and the excess quantity of material is then removed by means of a doctor scraping along the plate surface to equalize the surface of the deposit with the surrounding surface of the plate. The gasket plate is then passed into an oven, typically at a temperature of around 200°, for a short time, typically less than 10 minutes, to cure the resin into a solid body adhering to the plate and incorporating the filler.

Alternatively, the thermosetting resin may be laid into the trough as a thread of viscous, uncured preparation, which is metered out of a nozzle moved along the trough by a pantograph or other robotized holder, e.g. as taught in US-3 737 169 or in EP-0 177 067.

Where a sintered metal is used rather than a thermosetting resin, the metal powder, such as iron, dispersed in a viscous binder, is applied following either of both techniques described above for the application of resin. The plate is then passed into an oven, but in this case the temperature is typically at around 1000°, and the dwelling time may be 30 minutes or more, to sinter the metal into a solid mass, while burning the binder away.

Plate 20 is also preferably embossed with a second trough 40, or peripheral trough, running along the outside edge of the engine block. Trough 40 is shallower than trough 34, and contains a deposit 42 of the same or similar high-resistance thermosetting resin preparation or sintered metal as trough 34. Trough 40 may be embossed in the same blanking step during which trough 34 is embossed, so that it involves no additional cost. The thermosetting material may also be applied during the same process as deposit 38, also substantially with no additional cost.

When the above-described gasket is locked between the cylinder head and the block, bore beads 26, 28 are elastically compressed, and lip 36 of plate 20 abuts closely against the overhanging flat area of plate 22. The resin deposit or sintered metal is thus substantially sealingly enclosed between plates 20 and 22 and is maintained insulated from the combustion gases in the cylinder. Therefore, where a resin is used, this cannot be burnt or degraded by the combustion taking place in the cylinder, in spite of the high operating temperatures.

It will be apparent to those skilled in the art that the trough filled with resin provides the full function of a conventional stopper, but its thickness can be chosen with high accuracy, and its manufacturing cost is lower than other known stoppers.

The depths of troughs 34 and 40 are chosen in relation to the pressure increases that are desired at the cylinder bore edge and at the outside edge, respectively. Typically, the depth of trough 34 (and therefore the thickness of deposit 38) is in the range 0.05 mm to 0.10 mm, while the depth of trough 40 is typically 0.02 to 0.06, although these values are not stringent, and are only given by way of example. Trough 40 is generally shallower than trough 34, in order to provide a higher-than-average pressure at the outer edge, though lower than the pressure around the cylinder bores. However, in certain cases both troughs may have the same depth.

A ready change that can be made to the gasket of Figure 2, within the teachings of the invention, is to dispense with the third steel plate 24, so that a two-layer gasket is obtained. Alternatively, the gasket of Figure 2 could be provided with a further spring steel plate, similar to one of plates 22 or 24, to obtain a four-layer gasket. These variations will be readily apparent to one skilled in the art.

With reference to Figure 3, a single-layer gasket is shown, according to another embodiment of the invention. The single plate 50 of this embodiment is similar to shim plate 20 of Figure 2, and is coated with an elastomeric resin on both sides. Similarly to plate 20 of Figure 2, it comprises a bore trough 52 and a shallower peripheral trough 54, each containing a respective deposit of a thermosetting resin or sintered metal 56, 58, similar to the composition of the gasket of Figure 1 and 2. Plate 50, however, is made of spring steel, and has an embossed bead 60, so that it also incorporates the functions of plate 22 or 24. When the gasket is locked in place, the resin or metal deposits lie against the flat face of the cylinder head, and are thus insulated from the combustion gases.

## Claims

1. An automotive steel cylinder head gasket comprising at least a first steel plate (20; 50) having openings (30) corresponding to respective cylinder bores and a stopper extending around each of said openings, the gasket further comprising an elastic bore bead (26, 28, 60) area running around each stopper and embossed in said first steel plate or in a further plate of the gasket, **characterized in that** each stopper comprises a shallow bore trough (34; 52) which is embossed in the first steel plate so that a short flat lip (36) is left between the radially inner limit of the trough and the edge of the opening, and **in that** said trough is filled with a thermosetting material (38; 56).

2. The gasket of claim 1, **characterized in that** the depth of each bore trough (34) is in the range 0.05 to 0.10 mm.

3. The gasket of any of claims 1 or 2, **characterized in that** it further comprises a peripheral shallow trough (40, 54) running along the outside periphery of the first steel plate (20; 50) and filled with a thermosetting material (42, 58).

4. The gasket of claim 3, **characterized in that** the peripheral trough (40, 54) is shallower than the bore troughs (34, 52).

5. The gasket of any of claims 1 to 4, **characterized in that** the thermosetting material is a thermosetting resin.

6. The gasket of claim 5, **characterized in that** said thermosetting resin includes a mineral filler.

7. The gasket of claim 5, **characterized in that** said thermosetting resin includes a filler made of a metallic powder.

8. The gasket of any of claims 5 to 7, **characterized in that** said thermosetting resin is a high-resistance epoxy resin.

9. The gasket of any of claims 1 to 4, **characterized in that** the thermosetting material is a sintered metal.

10. The gasket of any of claims 1 to 9, **characterized in that** the elastic bore beads (60) are embossed in the said first steel plate (50).

11. The gasket of any of claims 1 to 10, **characterized in that** it further comprises a second steel plate (22) stacked together with the first plate (20) on its side bearing the thermosetting material.

12. The gasket of claim 11, **characterized in that** the areas of the second steel plate (22) overhanging the deposits of thermosetting material (38, 42) are flat

13. The gasket of claim 11 or 12, **characterized in that** the second steel plate (22) is embossed with an elastic bore bead (26) running around each bore trough (34).

14. The gasket of any of claims 1 to 13, **characterized in that** it further comprises a third steel plate (24) stacked together with the first plate (20) on its side opposite to the deposit of thermosetting material.

15. The gasket of claim 14, **characterized in that** the second steel plate (24) is embossed with an elastic bore bead (28) running around each bore trough (34).

16. The gasket of any of claims 1 to 15, **characterized in that** the thermosetting material is deposited by a silk-screen printing technique.

17. The gasket of any of claims 1 to 15, **characterized in that** the thermosetting material is deposited as a metered thread of viscous material from a nozzle.

## Patentansprüche

1. Stahlzylinderkopfdichtung für Kraftfahrzeuge, die mindestens ein erstes Stahlblech (20; 50) umfaßt, das zu jeweiligen Zylinderkammern entsprechende Öffnungen (30) und einen sich um jede der Öffnungen erstreckenden Stopper aufweist, wobei die Dichtung ferner eine elastische Kammersicke (26, 28, 60) aufweist, die sich um jedem Stopper erstreckt und in dem ersten Stahblech oder in einem weiteren Dichtungsblech geprägt ist, **dadurch gekennzeichnet, daß** jeder Stopper eine seichte Kammerrinne (34; 52) aufweist, die in dem ersten Stahblech geprägt ist, wobei eine kleine flache Lippe (36) zwischen der radial inneren Grenze der Rinne und der Grenze der Öffnung entsteht, und daß die obengenannte Rinne von einem wärmehärtenden Werkstoff (38; 56) gefüllt ist.

2. Dichtung nach Anspruch 1, **dadurch gekennzeichnet, daß** die Tiefe jeder Kammerrinne (34) 0,05 bis 0,10 mm beträgt.

3. Dichtung nach Anspruch 1 oder 2, **dadurch gekennzeichnet, daß** sie eine seichte, von einem wärmehärtenden Werkstoff (42, 58) gefüllte Umfangsrinne (40, 54) aufweist, die sich entlang des äußeren Umfangs des ersten Stahlblechs (20; 50) erstreckt.

4. Dichtung nach Anspruch 3, **dadurch gekennzeichnet, daß** die Umfangsrinne (40, 54) seichter als die Kammerinnen (34, 52) ist.

5. Dichtung nach einen der Ansprüche 1 bis 4, **dadurch gekennzeichnet, daß** das wärmehärtende Werkstoff ein härtbares Kunstharz ist.

6. Dichtung nach Anspruch 5, **dadurch gekennzeichnet, daß** das härtbare Kunstharz ein mineralisches Füllstoff enthält.

7. Dichtung nach Anspruch 5, **dadurch gekennzeichnet, daß** das härtbare Kunstharz ein aus einem Metallpulver bestehendes Füllstoff enthält.

8. Dichtung nach einen der Ansprüche 5 bis 7, **dadurch gekennzeichnet, daß** das wärmehärtende Werkstoff ein hochfestes Epoxidharz ist.

9. Dichtung nach einen der Ansprüche 1 bis 4, **dadurch gekennzeichnet, daß** das wärmehärtende Werkstoff ein Sintermetall ist.

10. Dichtung nach einen der Ansprüche 1 bis 9, **dadurch gekennzeichnet, daß** die elastische Kammersicken (60) in dem ersten Stahlblech (5) geprägt sind.

11. Dichtung nach einen der Ansprüche 1 bis 10, **dadurch gekennzeichnet, daß** sie ein zweites Stahlblech (22) aufweist, das über dem ersten Stahblech (20), auf seiner wärmehärtendes Werkstoff tragende Seite, überlagert ist.

12. Dichtung nach Anspruch 11, **dadurch gekennzeichnet, daß** die die Ablagerungen vom wärmehärtenden Werkstoff (38, 42) überragende Zonen des zweiten Stahblechs (22) sind flach.

13. Dichtung nach Anspruch 11 oder 12, **dadurch gekennzeichnet, daß** das zweite Stahlblech (22) eine geprägte, elastische Kammersicke (26), die sich um jede Kammerrinne (34) erstreckt.

14. Dichtung nach einen der Ansprüche 1 bis 13, **dadurch gekennzeichnet, daß** sie ein drittes Stahlblech (24) aufweist, das über dem ersten Stahblech (20), auf seiner zu den Ablagerungen von wärmehärtendem Werkstoff entgegengesetzte Seite, überlagert ist.

15. Dichtung nach Anspruch 14, **dadurch gekennzeichnet, daß** das zweite Stahlblech (24) eine geprägte, elastische Kammersicke (28), die sich um jede Kammerrinne (34) erstreckt.

16. Dichtung nach einen der Ansprüche 1 bis 15, **dadurch gekennzeichnet, daß** das wärmehärtende Werkstoff durch einer Siebdrucktechnik abgelagert ist.

17. Dichtung nach einen der Ansprüche 1 bis 15, **dadurch gekennzeichnet, daß** das wärmehärtende Werkstoff als dosierte Raupe von zähflüssigem Werkstoff aus einer Düse abgelagert ist.

## Revendications

1. Joint de culasse en acier pour automobile comprenant au moins une première plaque en acier (20; 50) ayant des ouvertures (30) correspondant à respectives chambres de cylindre et un stopper qui s'étend autour de chacune desdites ouvertures, le joint comprenant en outre une nervure élastique de chambre (26, 28, 60) qui s'étend autour de chaque stopper et qui est moulée dans ladite première plaque en acier ou dans une ultérieure plaque du joint, **caractérisé en ce que** chaque stopper comprend une rigole de chambre peu profonde (34; 52) qui est moulée dans ladite première plaque en acier, de façon qu'il s'étend un court bord plat (36) entre la limite radialement interne de la rigole et le contour de l'ouverture, et **en ce que** ladite rigole est remplie d'une matière thermodurcissable (38; 56).

2. Joint selon la revendication 1, **caractérisé en ce que** la profondité de chaque rigole de chambre (34) est comprise entre 0,05 et 0,10 mm.

3. Joint selon une quelconque des revendications 1 ou 2, **caractérisé en ce qu'**il comprend en outre une rigole périmétrale peu profonde (40, 54) qui court le long du périmètre extérieur de la première plaque en acier (20; 50) et qui est remplie d'une matière thermodurcissable.

4. Joint selon la revendication 3, **caractérisé en ce que** la rigole périmétrale (40, 54) est moins profonde que les rigoles de chambre (34, 52)

5. Joint selon une quelconque des revendications 1-4, **caractérisé en ce que** la matière thermodurcissable est une résine thermodurcissable.

6. Joint selon la revendication 5, **caractérisé en ce que** ladite résine thermodurcissable incorpore un additif minéral.

7. Joint selon la revendication 5, **caractérisé en ce que** ladite résine thermodurcissable incorpore un additif constitué d'une poudre métallique.

8. Joint selon une quelconque des revendications 5 -7, **caractérisé en ce que** ladite résine thermodurcissable est une résine epoxy à haute résistance.

9. Joint selon une quelconque des revendications 1 -4, **caractérisé en ce que** la matière thermodurcissable est un métal fritté.

10. Joint selon une quelconque des revendications 1-9, **caractérisé en ce que** les nervures élastiques de chambre (60) sont moulées dans ladite première plaque en acier (50).

11. Joint selon une quelconque des revendications 1-10, **caractérisé en ce qu'**il comprend en outre une deuxième plaque en acier (22) superposée sur la première plaque (20) sur son côté qui porte la matière thermodurcissable.

12. Joint selon la revendication 11, **caractérisé en ce que** les aires de la deuxième plaque en acier (22) qui surplombent les dépôts de matière thermodurcissable (38, 42) sont plates.

13. Joint selon la revendication 11 ou 12, **caractérisé en ce que** la deuxième plaque en acier (22) présente une nervure de chambre élastique moulée (26) qui court le long de chaque rigole de chambre (34).

14. Joint selon une quelconque des revendications 1-13, **caractérisé en ce qu'**il comprend en outre une troisième plaque en acier (24) superposée sur la première plaque (20) sur son côté opposé à celui qui porte la matière thermodurcissable.

15. Joint selon la revendication 14, **caractérisé en ce que** la deuxième plaque en acier (24) présente une nervure de chambre élastique moulée (28) qui court le long de chaque rigole de chambre (34).

16. Joint selon une quelconque des revendications 1-15, **caractérisé en ce que** la matière thermodurcissable est déposée par une technique sérigrafique.

17. Joint selon une quelconque des revendications 1-15, **caractérisé en ce que** la matière thermodurcissable est déposée à partir d'un gicleur en forme de cordon dosé de matière visqueuse.
